# EUROPEAN PATENT APPLICATION

(11) **EP 2 239 673 A1**
(43) Date of publication of application: **13.10.2010**
(21) Application number: 09157735.3
(22) Date of filing: 09.04.2009
(51) Int. Cl.: G06F 17/30

(54) **Method and system for storing data upon a public net**

(71) Applicant: Université de Berne, 3012 Berne (CH)
(72) Inventor: Aebi, Max, 2503, Biel (CH); Ambrose, Antony, Ormond Beach, FL 32174 (US); Benoist, Emmanuel, 68350, Didenheim (FR)
(74) Representative: GLN

(57) **Abstract**

The invented system for storing data on a public network comprises:
- a first server side (9) which includes at least a module to store data of a first kind;
- a second server side (4) to edit a centralized database with data of a second kind;
- at least a client side which comprises a terminal (2) with a browser to send requests to initiate a regular session with said servers of said first and second server sides, and a means for receiving in response to a request at least a first file from a module of said first server and a second file from the said second server, a means for mitigating both said first and second received files to compile said requested data.

## Description

### METHOD AND SYSTEM FOR STORING DATA UPON A PUBLIC NET

### Technical Field

The present invention relates to a method for storing or publishing data. It also relates to a system for storing data upon a public network.

### Background of the invention

In the art, it is well known to publish information which is made available to connected clients by means of web browsers. By requesting a page loaded from a known server site, the browser of the client is able to download a file containing data. After it is downloaded, the file is run by the client browser and its content is made available to the requesting user. Such a file is known as a HTML file which responds to an available standard indicated as HTML with a version number.

Usually, requested data are text information, but can also be images, video or graphic files. Style sheets, players and other utilities are well known in the art of communicating data to the public. Also, some extended standards, like XML, are made available and useful for many browsers.

It is also well known to embed some pieces of code such as JavaScripts or applets written in Java which are compiled or interpreted by software engines in the browser at the client side. Therefore, the user is able to interact with the server by running these pieces of code.

The technical problem of how to allow access to these data only to authorized users has been known for a long time. For example, it is known to run at the client side an authority module upon the browser to avoid unauthorized users to access to the protected data at special pages. A login session is opened and identity of the requesting user is controlled at the server side.

With the proliferation of data collection through public networks, the topic of privacy protection of personal data is becoming more and more important. Personal data is a piece of information containing two parts, namely, a first part related to identity related data, and second part related to informative data which are related to the person identified by the identity related data.

To ensure confidentiality of that kind of data, it is well known to run an encryption algorithm when personal data are to be sent and to run a decryption algorithm at the receiving end. As a result, when it is stored and/or downloaded/uploaded, personal data are not useful to users without the related keys for decryption.

To enhance reliability in communications on a public network, it is also known to certify identity of both receiving and sending parties of a data exchange by means of digital certificates which play the role of a signature to authenticate the exchange.

In the field of the medical management of personal data, networks are a key matter. For example, some diseases of a given person are treated over a long time by several practitioners. Key data from a given pathology are very important to be available over a long period of time. Practitioner or physician is equipped with a client terminal connected to the Internet Network. Means for connecting to a server are provided at the browser to consult, edit and/or modify medical data related to the examined patient.

Medical data are very sensitive and the privacy of to whom it belongs must be protected at the highest level. At the same time some informative data are very useful in the view of data processing including statistics and compilation. The invention is not exclusive of other methods to protect data and/or to authenticate the members of a session during a communication.

### Summary of the invention

The present invention relates to a system for storing data on a public network which comprises:
- a first server side which includes at least a module to store data of a first kind;
- a second server side to edit a centralized database with data of a second kind ;
- at least a client side which comprises a terminal with a browser to send requests to initiate a regular session with said servers of said first and second server sides, and a means for receiving in response to a request at least a first file from a module of said first server and a second file from the said second server, a means for mitigating both said first and second received files to compile said requested data.

The present invention relates also to a method for storing data on a public network. It comprises the steps of:
- dividing a input data unit into a set of data of a predetermined first kind and a set of data of a predetermined second kind;
- upload said set of data of a first kind to a module of a first server side and said set of data of a second kind to a centralized database at a second server side ;
- opening a session at a client side by requesting at least a first set of data of the said first kind to a module of a first server side and at least a second set of data of the said second kind to a centralized database at a second server side, and then merging both first and second sets of data to compile at least one output data unit at the client side.

### Brief description of the drawings

The present invention is further described in the detailed description which follows, in reference to the noted plurality of drawings by way of non-limiting examples of exemplary embodiments of the present invention, in which like reference numerals represent similar parts throughout the several views of the drawings, and wherein:

FIG. 1 is a schematic diagram of a system for storing personal data on a public network according to the present invention;

FIG. 2 is a schematic diagram of a system for adding data of two kinds under control of a client;

FIG.3 is a drawing of the streams of data for a login step of an embodiment of the present invention;

FIG. 4 is a drawing of actions executed in a specific step of the method of the present invention; and

FIG. 5 is a drawing of actions executed in another specific step of the method of the present invention.

### Detailed description

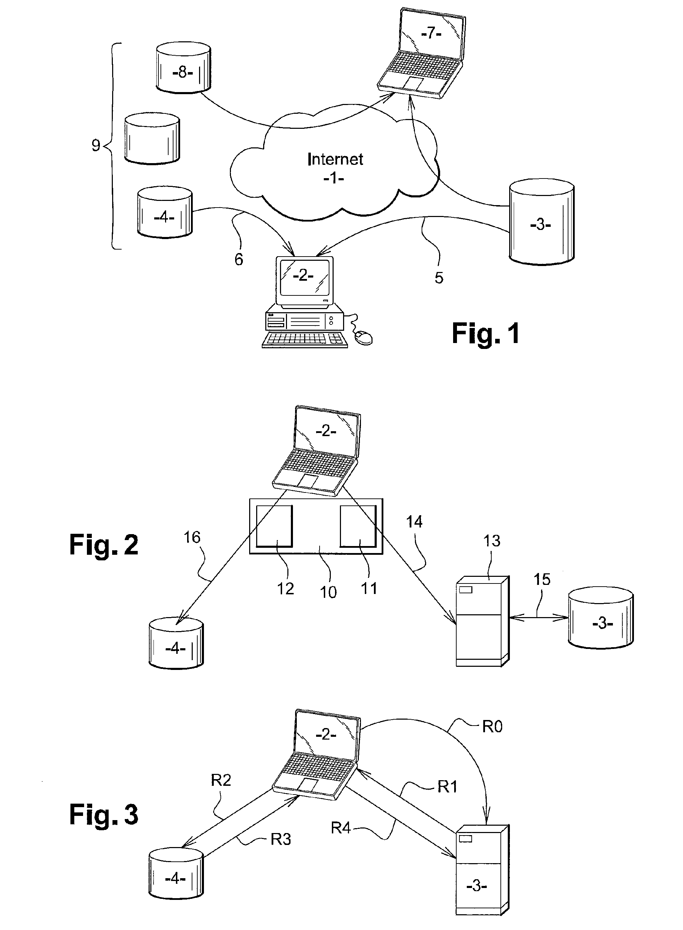

At the FIG. 1, it is schematically represented an example of a system for storing and/or editing personal data on a public network which comprises:
- a server 4 at a first server side 9 which includes at least a module 4 to store under a decentralized manner data of a first kind ;
- a server 3 at a second server side to store at a centralized database data of a second kind ;
- at least a client 2 at a client side which comprises a terminal like a personal computer PC, laptop or the like. At the client terminal, a browser is running to send requests on the Internet 1. Such a request initiates a regular session of the client terminal with said servers 4 and 3 of said first and second server sides.

The browser running at the client terminal 2 comprises also a means for receiving in response to the first opening request at least a first file from a module of said first server and a second file from the said second server. A means for combining both said first and second received files is provided for compiling said requested personal data.

Prior to the normal use of the two servers 3 and 4 with the terminal 2, data are divided from a source data into two sets of data. Original data are an input data unit which is divided into a set of data of a predetermined first kind and a set of data of a predetermined second kind.

The two kinds of data are considered under technical considerations so that administrators of the two server sides are never aware of their content.

In a preferred embodiment, as it will be discussed later, first kind of data is determined by privacy of a person, identity related data known only at a determined client terminal with a determined user. In this embodiment, second kind of data comprises medical data which are collected for any medical treatment or the like, ordered by or with the user at the terminal 2.

It results from the invented system under the invented method, that only patient and physician at the client terminal are able to manage personal data compiled only at the client side with identity data of the first kind and medical data of the second kind.

The invented method comprises also a step for uploading said set of data of a first kind to a module of a first server side and said set of data of a second kind to a centralized database at a second server side.

Such a step is executed when the physician at the client terminal 2 edits and/or updates identity and/or medical data of the first and second kind only at the terminal 2.

The invented method comprises then an opening session step at a client side by requesting at least a first set of data of the said first kind to a module of a first server side and at least a second set of data of the said second kind to a centralized database at a second server side, and then merging both first and second sets of data to compile at least one output data unit at the client side.

Data units are data files which are sent and received on the Internet Network. They are also stored at databases served at the two server sides 3 and 9.

At the FIG. 2, a schematic drawing of an architecture according to the invention as described at FIG. 1 is also presented to give some technical details at the client side terminal 2. Terminal 2 at the client side runs a standard browser 10 in which a simple HTML page is previously opened when user has edited a predetermined address URL in the address bar of the browser. The predetermined address URL is the location of the HTML page stored at the second server side.

The HTML page comprises both data and code. Browser 10 runs code embedded in the source code of the HTML page. In an embodiment, client 2 connects to the second server side 13 when the user has selected an identifier of the address of the required HTML page which is located at the server side 13, 3. When the connection is on, the HTML page which contains both data of a second kind and code is loaded at the client side. Browser 10 compiles or otherwise processes said code and, mainly, code referred as 12 at the drawing. The server at the second server side comprises a web server onto which run an application server 13 and a database server 3 which stores data of the second kind.

Such a set 12 of codes has many possible implementations. In a given example, an icon as an image is drawn at a chosen location at the display of the HTML page at the browser 10. When a click of a mouse is detected at the location of the image, as it is known in the art, the detected event activates a http request as a POST method to connect the client side browser at the said first server side, more peculiarly to a module 4 in which a first kind of data are stored. In response, module 4 sends to the client terminal 2 data of the said first type which are displayed or otherwise processed at the client terminal with the standard browser 10.

In an embodiment, data coming from the module 4 of the first server side are loaded in the Document Object Model DOM of the HTML page 10 displayed at the browser of the client terminal 2.

In a preferred embodiment, the standard browser 10 contains a software module to execute software scripts as JavaScripts. The set 12 of code is written as a script in the JavaScript language. It is written in the source code of the HTML page 10, loaded from the server of the second server side 3. As it has been described above, an icon is drawn at a given location of the displayed page 10. When a click of a mouse is detected at the client terminal 2, an http request is sent to the module 4 and data of the first kind which respond to the request are loaded at a programmed location.

As a result, the present invention provides a means for adding or merging data 4 of a first kind to data 3 of a second kind in a single unit of data 10 under control only of the client terminal 2, the two entities controlling their own data of the first and second kinds being not aware of the content of the data of the other entity.

In an embodiment of the present invention, the client terminal 2 is operated by a physician receiving a patient, personal data of whom are recorded as data of the said first kind at a module 4. Medical data of the patient comprising diagnostic data, radiographies, executed protocols or the like are recorded at the centralized server 3 of the data of the second kind. The merits of the present invention include the following. Physician is not aware of the private data of the second type related to the personal data of his patient. Further, the administrator of the centralized database 3 for the data of the second kind, which are medical data, is unaware of the private data of the first kind because the medical data of the first kind are only related to the corresponding patient with an anonymous identifier. Further, the administrator of the centralized database 3 has access rights to the only data of the second kind, i.e. medical data. Therefore, statistics with the medical data recorded are restricted to analysis of the aggregate anonymous data by means of a statistical tool.

Legal status of personal data differs according to countries and/or organizations. Complex architecture results of this analysis shown at FIG. 1, in that data of the first kind are split between several modules 4, 8 at the first type server side 9 on the basis of the privacy status of the data of the users. Each module like module 4 is devoted to a specific legal requirement or other regulation. For example, if medical data which contain personal data are controlled under a given national regulation, that national regulation determines the access restrictions to a specific module at the first kind data server side 9. Therefore, a physician which uses the system of the invention operates in a first zone of privacy protection with a client terminal 2 which connects to his proper national module 4 which relies upon his national regulations for the confidentiality of private data. Another physician which uses the system of the invention operates in a second zone of privacy protection with a client terminal 7 which connects to his proper national module 8 which relies upon his national regulations. Both applications running at terminals 2 and 7 connect to centralized server 3 at the second server side.

In the following, an application of the present invention to a network designed for medical data in an international context is described. Medical data as previously described are personal data of a patient the disease of who is diagnosed and cured with at least a physician or any other member of a medical team. These personal data are strongly coupled with identity of the patient. Confidentiality of identity of a patient is determined by a specific regulation, the definition of which has determined both the access restrictions imposed upon the database recorded at a given module 4 at the first kind server side, and also the construction of the various modules for each country zone.

In a practical embodiment, the system of the invention comprises:
- a Central Server containing the application, anonymous data about persons and users, which corresponds to the server 3 of the data of the second kind at FIG.1;
- a Module containing information about the users (username/password) and persons documented on the central server, so called documented-persons (identity related information) , which corresponds to the server 4, 9 of the data of the first kind at FIG.1;
- a Client Hub that controls the information between both servers. The used network is the World Wide Web and uses standard web protocols and languages.

The central server contains the main application. It generates the pages comprising HTML and JavaScript and executing the application. It deals also with anonymous data about persons. Such data are interesting for statistical purpose or for administration. All the web pages are generated by this central server.

The module 4 contains only a minimal server. It is only used to serve and store personal data about users and persons. The access restrictions imposed upon the records of the database stored in module 4 are determined on the basis of a national regulation standard which is related to the users and persons which are recorded in it, as it has been described above.

The client-hub or terminal 2 runs a normal browser interpreting pages generated by the central server and containing JavaScript programs. The client-hub is the interface between the user and the two servers. The interface works in the background. The user doesn't see which server is contacted for which purpose.

The central server provides a JavaScript library for the client-hub. This library contains all the connection information. The central server provides pages containing the different menus and forms. The data typed are not all sent to the server, some of them are sent to the module. It evaluates the data and stores some of them before answering to the client. The client makes the connection to the central server.

In such an embodiment, the first kind of data are identities of documented persons. Documented persons are patients and/or users of the client terminals, each documented person having identity related data and medical data to be edited. A module at the said first server side is designed for a specific confidentiality policy. The first kind of data relates to information like the identity data of said documented persons, patients and/or users.

A documented person has also medical information which is stored at the central database server at the second server side. Therefore, medical data are information of the second kind of data. They are stored at the central database server along with HTML pages and/or applications related to said documented persons to be requested by the client terminals.

The main steps of the method of the invention are:
- the login step;
- the registration of a new user;
- the registration of a new patient;
- the search of a person or patient by a user;
- the logout step.

Other steps have been described above.

### The login step

At FIG. 3, it has been described the stream of the Internet requests and answers from the terminal 2 (see FIG.1) and the two servers, namely 4 (FIG. 1) of the personal data or data of the said first kind, and 3 (FIG. 1) of the medical data or data of the said second kind. The goal of the login step is to grant a user access to the data of some persons which are related with the use. It will be the case of a patient of a physician. The logged-in user has to have access to the data on the central server 3, as well as the one on the module server 4.

The login operation uses the three parts of the system. First, the client 2 (FIG. 3) sends a request R0 for a page to the central server 3 (FIG. 3) of the data of the second kind, namely medical data. Then, the central server sends as an answer to R0 the requested HTML page R1. This page contains a login form with two fields which are created for the record in the centralized database at server 3: username UN and password UP.

The user at terminal 2 fills the two fields in the form of the login HTML page displayed at the browser and their content is read by a JavaScript program which was embedded in the source code of the login HTML page received from centralized server 3 by the terminal 2 of the connected user. The content of the field is not sent to the central server 3, but to the module 4 of the first server side server 4 together with a central server's sessionID. This is done by accessing a Document Object Model (DOM) of the original HTML page generated and sent by the centralized server 3 at request R1. The JavaScript program creates a new HTML '<script>' tag in the HTML page, which requires the browser of the user terminal 2 to send a new request R2 to the module 4. The module 4 which runs a reduced server, analyses the transferred information. If the user information matches the one stored in the database of the data of the first type, namely personal data, the module 3 creates an anonymous credential CR. This credential CR contains the user identification 'userID' of the user on the module 4 and the current session identification, 'sessionID', on the central server 3. This is signed with the private key PKM of the module 4. The credential CR is the concatenation of the identifications 'userID' and 'sessionID' of the central server and signature SIG.

The client-hub or terminal 2 receives R3 this information as a response to its request R2. The response R3 contains the credential or a negative answer. If the client 2 received a credential, it is transferred R4 to the central server.

The central server receives the credential, it verifies the validity of the signature using the public key of the module, and then the user receives the rights defined in the database.

All the users are referred to by their userID and module ID. This means that a module can only grant its own users access to the central server.

### Registration of a new user

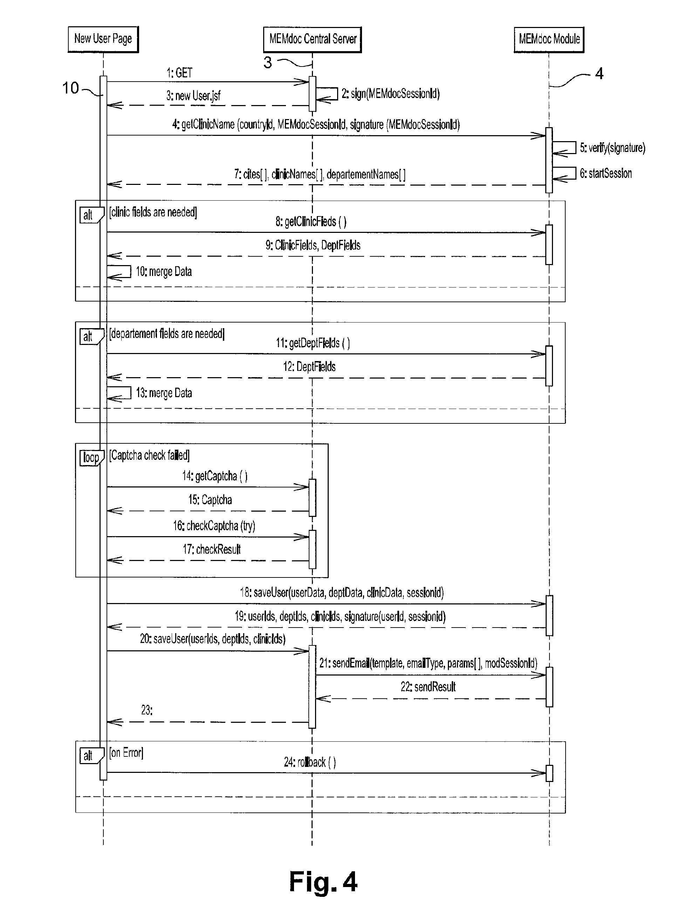

At FIG. 4, it has been described the sequence of the partial operations executed during the registration step.

When a new user is inserted in the databases, it requires a splitting of the data between the two servers, as it has been specified above for the data of the two kinds.

The client 2 first requests to the central server 3 a page for registering a new user. The central server 3 sends an HTML page in which an HTML form containing all the default fields to be filled. Together with this form, the client receives an identifier 'sessionID' for the central server 3, which is also signed. Then a JavaScript program requests some custom fields from the module 4.

Then the content of all the fields is sent to the module 3 together with the signed identifier 'sessionID', using an object JSON which is generated at the terminal side 2. The module 3 creates a new record in its database and creates a new identifier 'userID'.

The new identifier 'userID' on the module 3 is then sent back to the client 2. This information is signed using the private key PKM of the module 3. The central server 4 receives the new identifier 'userID', creates a new user record UR in its database and sends back an acknowledgment ACK or an error ERR to the client 2. If the client 2 receives an error ERR, it sends a rollback command to the module 4, in order to remove the inserted user.

More precisely, by reading FIG. 4 from the top to the bottom, it is seen exchanges between the terminal 2 at the left side, and the central server 3 or the module 4. Each rectangle drawned onto the hashed line relates to an application which is run on the part of the system which corresponds.

At '1', a GET method has sent data from the HTML form in the New User HTML page to the central server 3. The server 3 runs a signature application to produce both the identifier 'ServerSessionId', a signature sign (ServerSessionId) and a JavaScript'newUser.jsf.

With these objects, client 2 sends a request getClinicNames() to the module 4 with some parameters comprising:
- 'countryId' which relates to the country for which database of users in module 4 is constructed;
- Identifier of the session with server 3 'ServerSessionId';
- result of the signature onto 'ServerSessionId'.

In response, module 3 runs at '5' a function verify() which is applied to the signature and at '6' a function to start the session at module 4, startSession. Which returns to client 2 at '7' a list of parameters comprising in the example:
cities[], clinicNames[], departmentsNames[], which generate lists of choices at the HTML page displayed at the terminal 2. These parameters or lists,
related with the new user registration step, are directly loaded from module 4 without any interception by the central server 3.

Then other operations are performed comprising:
At '8': request getClinicFields() from client 2 to module 4;
At '9': data 'ClinicFields', 'DeptFields', in response;
At '10': an operation to merge data from operation '9' to the data in the originally loaded HTML page at terminal 2;
At'11': request getDeptFields()from client 2 to module 4;
At'12': answer parameter DeptFields;
At '13': an operation to merge data from operation '12' to the data in the originally loaded HTML page at terminal 2;
At '14' to '17': an optional step to authenticate the session with the central server 3 under the so-called Captcha() procedure; Captcha is a well known procedure that produces an image representing characters that cannot be understood by a machine. The user must type the characters in a field to prove that he is a human;
At '18': a request saveUser() from terminal 2 to module 4 which allows registration of the definition of the new user;
At '19'; as answering, parameters userIds, deptIds, clinicIds, signature(userId, sessionId) to terminal 2 which define an alias to the new user specially designed to be recorded anonymously at central server 3;
At '20': a request saveUser() which uses the alias of the user from terminal 2 to the central server 4 and to instruct the new data be stored therein;
At '21': in response to the sending of the saveUser() request by the central server 3, the central server 3 generates a request sendEmail() to the module 4 with the alias of the new user to store the real personal data of the new user at the database managed at the module 4;
At '22' to '24': the answer from module 4 to terminal 2 through the central server 3, and the already described rollback command.

### Registration of a new person or patient by a registered user

This step is the same that the registration step of a new user except that there are only default fields.

### Search step of a person by a user

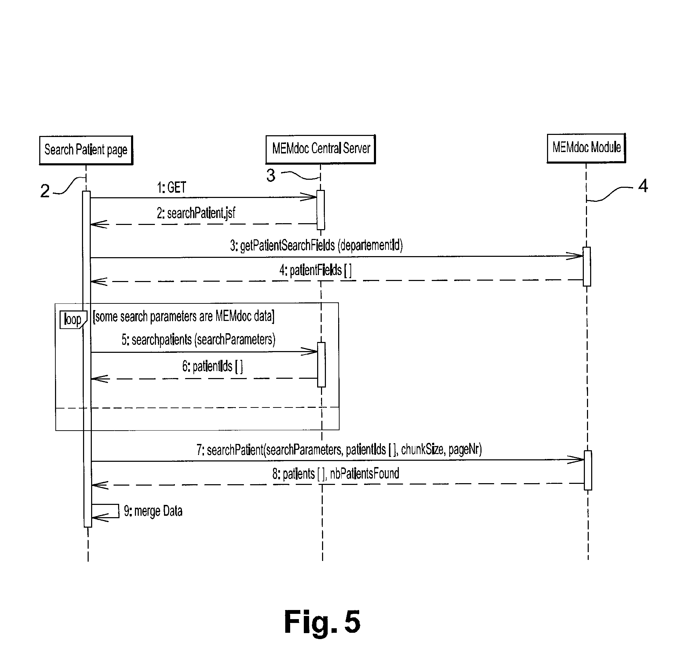

The client 2 makes a request by a GET method (FIG. 5 : at '1') on a submit action in an HTML form at the original HTML page loaded from the central server 3. In response at '2', a search patient page searchPatient.jsf is loaded from the central server 3. The requested page is returned containing fields for the search. Some additional fields are then requested at '3' by JavaScript getPatientSearchField() on the module 4 and received at '4' onto the terminal 2.

The user fills up the fields. Some fields contain information about the identity of the person stored on the module 3, some about the anonymous stored on the central server 4.

The first step is to send at '5' the anonymous information to the central server, which returns via an AJAX application a list of persons IDs at '6': patientIds[]. These are the Ids of the persons satisfying the previously sent criteria.

Then, the client 2 sends the rest of the search parameter (identity related information) at '7', and the list of possible persons to the module.

The Module 4 sends back at '8' a list of persons and the number of persons found. The data is then merged at '9' on the client 2 with the data that was received from the central server 3.

### Logout step

The logout procedure starts with the request for the logout page. Then the client 2 receives a logout HTML page from the central server 3. This page when loaded at the browser of terminal 2 calls the JSON function logout() on the module 4 which destroys the session on the module 4.

Then the client 2 sends a request for logout() on the central server 3. The central server 3 destroys the session on its side.

Finally any previously ascribed cookie is destroyed on the client 2.

In an embodiment, the data are encrypted to ensure a high level of security. A specific method has been developed which is disclosed hereinafter.

Therefore, the system of the invention comprises an encryption/decryption module at each end of the communicating parties, namely at the light server at the first server side, onto each module 4, 8, at the central server at the second server side 4 and also at each client terminal 2.

According to the present invention, at a client terminal 2, an identifier of a given user, like a patient and/or a physician, is created and exchanged between the client terminal 2 and any of the two first and second kind data servers. Such an identifier is built on personal data such as a social security number. It should be treated as a private data set and should in no case be stored on the central server 3. Any person directly accessing this identifier has direct access to that person.

## Claims

1. A system for storing data on a public network which comprises:
- a first server side which includes at least a module to store data of a first kind;
- a second server side to edit a centralized database with data of a second kind;
- at least a client side which comprises a terminal with a browser to send requests to initiate a regular session with said servers of said first and second server sides, and a means for receiving in response to a request at least a first file from a module of said first server and a second file from the said second server, a means for adding both said first and second received files to compile said requested data.

2. A system according to claim 1, wherein the said second server side is constructed as a central server with a means for running a main application to generate pages comprising HTML and JavaScript and executing requests from a client terminal such that it deals only with data of the second kind.

3. A system according to claim 2, wherein the central server contains means for executing statistical and/or administrative tasks only for the data of the second kind.

4. A system according to claim 2, wherein at least a module is provided to store data of the said first kind at the first server side and a short server to access data of said first kind only from client terminals having received pages generated from the said central server at the second server side.

5. A system according to any of the preceding claims, wherein an encryption/decryption module is provided at each end of the communicating parties.

6. A method for storing data on a public network, wherein it is provided the steps of:
- dividing a input data unit into a set of data of a predetermined first kind and a set of data of a predetermined second kind;
- upload said set of data of a first kind to a module of a first server side and said set of data of a second kind to a centralized database at a second server side;
- opening a session at a client side by requesting at least a first set of data of the said first kind to a module of a first server side and at least a second set of data of the said second kind to a centralized database at a second server side, and then merging both first and second sets of data to compile at least one output data unit at the client side.

7. A method according to claim 6, wherein a login step is executed which comprises only requests from a user at a client side terminal first to the central database to request an HTML page generated in view of the user at the client terminal and containing a form and an application to request data of the first kind to a module at the first server side, receiving data of a first kind and merging it with data of the second kind received from the central database at the first side server, and requesting a session identifier to the central database , receiving at the client terminal a credential from the central database server at the second server side.

8. A method according to claim 7, wherein a step is performed to edit data onto a client terminal having a credential and both a predetermined module at first side server and the central database server, a HTML page being loaded with an application from the central database server at the second server side to the client terminal, having also data of the second kind, corresponding data of the first kind being requested, retrieved and downloaded from the determined module at the first side server onto the client terminal by running said application.

9. A method according to any of the claims 6 to 11, wherein first kind of data are identities of documented persons, like patients and users of client terminals, a module at the said first server side being designed for a specific confidentiality policy, and second kind of data are information related to the identity data of said documented persons, patients and/or users, stored at the central database server at the second server side, along with HTML pages and/or applications related to said documented persons to be requested by the client terminals.
